# EUROPÄISCHE PATENTSCHRIFT

(11) **EP 1 895 547 B1**
(45) Veröffentlichungstag und Bekanntmachung des Hinweises auf die Patenterteilung: **16.06.2010**
(21) Anmeldenummer: 07014032.2
(22) Anmeldetag: 18.07.2007
(51) Int. Cl.: G21C 3/334, G21C 3/34

(54) **Brennelement für einen Leichtwasserreaktor und Verfahren zur Reparatur eines solchen Brennelements**
Fuel assembly for a light water reactor and method of repairing such a fuel assembly
Assemblage de combustible pour réacteur à eau légère et procédé de réparation d'un tel assemblage de combustible

(30) Priorität: 31.08.2006 DE 102006040965
(43) Veröffentlichungstag der Anmeldung: 05.03.2008
(73) Patentinhaber: AREVA NP GmbH, 91052 Erlangen (DE)
(72) Erfinder: Fraundorfer, Franz Josef, 91093 Hessdorf (DE); Münsterjohann, Gregor, 91077 Neunkirchen am Brand (DE); Friedrich, Erhard, 90542 Eckental (DE)
(74) Vertreter: Mörtel & Höfner

(56) Entgegenhaltungen:
- EP-A- 0 493 259
- EP-A- 0 735 543
- FR-A- 2 633 436
- FR-A- 2 833 399
- KNECHT K J ET AL: "NEW TECHNIQUES FOR INVESTIGATION AND RECONSTITUTION OF FUEL ELEMENTS" KERNTECHNIK, CARL HANSER VERLAG. MUNCHEN, DE, Bd. 56, Nr. 2, 1. April 1991 (1991-04-01), Seiten 68-71, XP000214534 ISSN: 0932-3902

## Beschreibung

Die Erfindung betrifft ein Brennelement für einen Leichtwasserreaktor und ein Verfahren zur Reparatur eines solchen Brennelements.

Ein Brennelement für einen Leichtwasserreaktor umfasst neben einem Brennstabbündel und Steuerstäben mehrere, in axialem Abstand voneinander angeordnete Abstandhalter. Ein Abstandhalter umfasst eine Vielzahl von Zellen, die beispielsweise durch gekreuzte Stege gebildet sind, sowie ihn umgrenzende Außenstege. Die Brennstäbe durchgreifen die Zellen der Abstandhalter und sind so lateral gehalten. Beim Beschicken des Reaktorkerns mit Brennelementen oder auch bei deren Entnahme aus dem Reaktorkern tritt das Problem auf, dass Abstandhalter durch gegenseitiges Hintergreifen ihrer Außenstege oder durch Kollision mit dem oberen Rand eines Brennelementkastens im Bereich der randständigen Zellen beschädigt werden können. Unter randständigen Zellen sind solche Zellen zu verstehen, die unmittelbar an einen Außensteg angrenzen oder diesem in zweiter Reihe benachbart sind. Wenn in einem derart betroffenen Schadbereich die laterale Halterung einzelner, beschädigte Zellen durchgreifender Brennstäbe nicht mehr in ausreichendem Maße gewährleistet ist, ist eine Weiterverwendung des Brennelements allenfalls nach einem äußerst aufwändigen Austausch des Abstaridhalters möglich.

Aus EP 735543 A1 ist ein Verfahren zur Reparatur eines Abstandhalters bekannt, bei dem unterhalb eines beschädigten Bereichs des Abstandhalters ein Reparatur-Gitter angeordnet wird, das zumindest eine der Anzahl der beschädigten Zellen des Abstandhalters entsprechende Anzahl von Ersatz-Zellen aufweist, und wobei wenigstens ein Teil der Ersatz-Zellen von Brennstäben durchgriffen ist.

Aufgabe der Erfindung ist es, ein Brennelement, das trotz Beschädigung einzelner Zellen eines Abstandhalters im wesentlichen uneingeschränkt funktionsfähig ist, sowie ein mit geringem Aufwand durchführbares Verfahren zur Reparatur eines beschädigten Brennelements anzugeben.

Diese Aufgabe wird hinsichtlich eines Brennelements gemäß Anspruch 1'und hinsichtlich eines Reparaturverfahrens durch Anspruch 13 gelöst. Bei einem erfindungsgemäßen Brennelement ist - in Bezug auf den Einbauzustand in einem Kernreaktorober- oder unterhalb des Schadbereichs am Abstandhalter mit Hilfe eines Verbindungsteils ein Ersatzelement befestigt, welches zumindest eine der Anzahl der beschädigten Zellen entsprechende Anzahl von Zellen umfasst, wobei zumindest ein Teil dieser Zellen von Brennstäben durchgriffen ist. Hierbei ist jeweils einer beschädigten Zelle des Abstandhalters eine intakte Zelle des Ersatzelements - in Bezug auf die Mittellängsachse des Brennelements - axial benachbart, welche die laterale Halterung eines beide Zellen axial durchgreifenden Brennstabes übernimmt. Vorteilhaft ist, dass ein betroffenes Brennelement nicht vollständig zerlegt werden muss, um einen defekten Abstandhalter auszutauschen. Es reicht vielmehr aus, dass nur die Brennstäbe aus dem Brennstabbündel herausgenommen werden, welche den Schadbereich durchsetzen. Nach der Fixierung des Ersatzelements können die herausgenommenen Brennstäbe, zumindest wenn es sich um den obersten Abstandhalter handelt (näheres hierzu siehe weiter unten), wieder in das Brennstabbündel eingesetzt werden. Ein Ersatzelement lässt sich beispielsweise auf einfache Weise dadurch herstellen, dass aus einem baugleichen Abstandhalter ein geeigneter Teilbereich herausgetrennt wird.

In einer bevorzugten Ausführung ist die Verbindung zwischen Abstandhalter und Verbindungsteil als Schnappverbindung ausgestaltet. Eine solche Verbindung erfordert außer einerrelativen Füge-Bewegung der miteinander zu verbindenden Teile keine weiteren Maßnahmen, so dass sie sich mit einem im Brennelementlagerbecken üblicherweise vorhandenen Manipulator problemlos herstellen lässt. Für die Fixierung des Verbindungsteils am Ersatzelement bestehen zwar nicht die sich bei einer Unterwassermontage ergebenden Beschränkungen. Trotzdem kann eine Schnappverbindung zweckmäßig sein, beispielsweise dann, wenn das Ersatzelement ein Teilbereich eines baugleichen Abstandhalters ist. Das Verbindungselement kann dann nämlich auf einfache Weise und insbesondere ohne bauliche Veränderungen des Ersatzelements an diesem fixiert werden, und zwar auf die gleiche Weise wie am beschädigten Abstandhalter.

Vorzugsweise ist eine Schnappverbindung dadurch gebildet, dass an einem Verbindungsteil sich - in Bezug auf dessen Mittellängsachse - axial erstreckende Federzungen vorhanden sind, die jeweils eine Zelle des Abstandhalters bzw. des Ersatzelements durchsetzen und an ihrem aus der Zelle herausragenden Freiende einen Rastvorsprung tragen, welcher mit einer Radialschulter die dem Rastvorsprung zugewandte Stirnkante eines Abstandhalter- bzw. Ersatzelement-Steges hintergreift. In der Regel ist auf der Stirnkante eines Abstandhalterstegs genügend Platz vorhanden, so dass sich ein Verbindungsteil der in Rede stehenden Art zur Reparatur einer Vielzahl unterschiedlicher Bautypen von Abstandhaltern eignet. Um ein sichere gegenseitige axiale Fixierung von Abstandhalter bzw. Eratzelement und Verbindungsteil zu erreichen, ist bei einer weiteren bevorzugten Ausführungsvariante vorgesehen, dass in einem der Höhe eines Steges entsprechenden Axialabstand am Verbindungsteil eine Anschlagfläche vorhanden ist, welche eine dem Rastvorsprung abgewandte Stirnkante eines Steges hintergreift. Dabei ist die Anschlagfläche vorzugsweise von einer sich rechtwinklig zur Mittellängsachse des Brennelements erstreckenden Stirnfläche eines Distanzstücks des Verbindungsteils gebildet, wobei an der Stirnfläche die Federzungen angeformt sind.

Eine definierte laterale Halterung des Verbindungsteils in einer Zelle wird vorzugsweise dadurch bewerkstelligt, dass am Verbindungsteil zumindest zwei mit diametral gegenüberliegenden Bereichen der Zelle zusammenwirkende, der Zellenform angepasste Anschlagflächen vorhanden sind. Im Falle einer eckigen Zelle sind die Anschlagflächen komplementär zum Eckbereich einer Zelle ausgestaltet, wodurch gleichzeitig eine Drehfixierung erreicht wird. Die Anschlagflächen sind im Falle eines Federzungen aufweisenden Verbindungsteils vorzugsweise an den Rastvorsprüngen der Federzungen und/oder an der Basis der Federzungen angeordnet. Um ein mit Hilfe eines Manipulators durchgeführtes Einführen der Federzungen in eine beschädigte oder intakte Zelle eines Abstandhalters bzw. eines Ersatzelements zu erleichtern, weisen die Rastvorsprünge mit einer Stirnkante eines Stegs zusammenwirkende Einführschrägen auf.

Zur Befestigung an einem eckige Zellen aufweisenden Abstandhalter ist eine Ausführung eines Verbindungsteils vorteilhaft, bei dem mindestens eine Federzunge vorhanden ist, welche die Zelle in einem Eckbereich durchsetzt, einem Bereich der Zelle also, der zur Halterung eines Brennstabs, etwa zum Anbringen von den Brennstab beaufschlagenden Federn, nicht benötigt wird. Die genannte Ausgestaltung ist dann besonders vorteilhaft, wenn, wie bei einer bevorzugten Ausführungsvariante, das Verbindungsteil bzw. dessen Distanzstück von einer zentralen Öffnung axial durchsetzt ist, welche von einem Brennstab oder einer Brennstab-Attrappe durchgriffen ist. Daneben ergibt sich aus der genannten Anordnung der Federzungen auch eine drehfeste Fixierung des Verbindungsteils am Abstandhalter. Dadurch dass ein Verbindungsteil von einem Brennstab oder einer Brennstab- Attrappe durchsetzt ist, werden strömungstechnische Verhältnisse geschaffen, die jenen des Ausgangsbrennelements etwa entsprechen. Anders ist dies allerdings hinsichtlich der thermohydraulischen Verhältnisse in einem von einem Verbindungsteil umgriffenen Brennstabbereich. Aufgrund des eine Zelle des Ersatzelements durchsetzenden Verbindungsteils ist dort kein freier Strömungsquerschnitt mehr vorhanden, so dass eine ausreichende Kühlung nicht mehr gewährleistet wäre. In diesen Fällen wird daher anstelle eines Brennstabs, beispielsweise des ursprünglichen Brennstabs, eine Brennstab-Attrappe eingesetzt. Für den Fall eines (im Einbauzustand) oberen, Brennstäbe im Bereich ihres brennstofffreien Plenums haltenden Abstandhalters kann dagegen der ursprüngliche oder auch ein anderer Brennstab verwendet werden. Zur lateralen Halterung eines ein Verbindungsteil durchgreifenden Brennstabs bzw. einer Brennstab-Attrappe sind die der Mittellängsachse des Verbindungsteils zugewandten Innenseiten der Federzungen komplementär zur Mantelfläche eines Brennstabs bzw. einer Brennstab-Attrappe ausgebildet.

Die eingangs genannte Aufgabe hinsichtlich eines Reparaturverfahrens wird gem. Anspruch 13 dadurch gelöst, dass (bezogen auf den Einbauzustand) ober- oder unterhalb bzw. auf einer in Richtung der Mittellängsachse der Brennelements weisenden Seite des Schadbereichs mit Hilfe eines Verbindungselements am Abstandhalter ein Ersatzelement fixiert wird, welches die Haltefunktion zumindest einer schadhaften Zelle übernimmt. Die sich daraus und sich aus den weiteren Verfahrens-Unteransprüchen ergebenden Vorteile wurden zum Teil bereits im Zusammenhang mit der Erläuterung des Brennelements angesprochen.

Die Erfindung wird nun unter Bezugnahme auf die beigefügten Zeichnungen näher erläutert. Es zeigen:
- Fig. 1: Ein Brennelement eines Druckwasserreaktors,
- Fig. 2: eine perspektivische Detailansicht eines Abstandhalters mit Schadbereich, eines Ersatzelements mit Verbindungsteilen und einer Brennstab-Attrappe,
- Fig. 3: die in Fig. 2 gezeigten Teile im Zusammenbau,
- Fig. 4: in perspektivischer Darstellung ein Ersatzelement mit zwei Verbindungsteilen,
- Fig. 5: die Federzungen eines Verbindungsteils in vergrößerter perspektivischer Darstellung,
- Fig. 6: ein Verbindungsteil im Längsschnitt,
- Fig. 7: eine Draufsicht auf eine Zelle eines Ersatzelements mit darin eingestecktem Verbindungsteil, in Richtung des Pfeils VII in Fig. 4 gesehen,

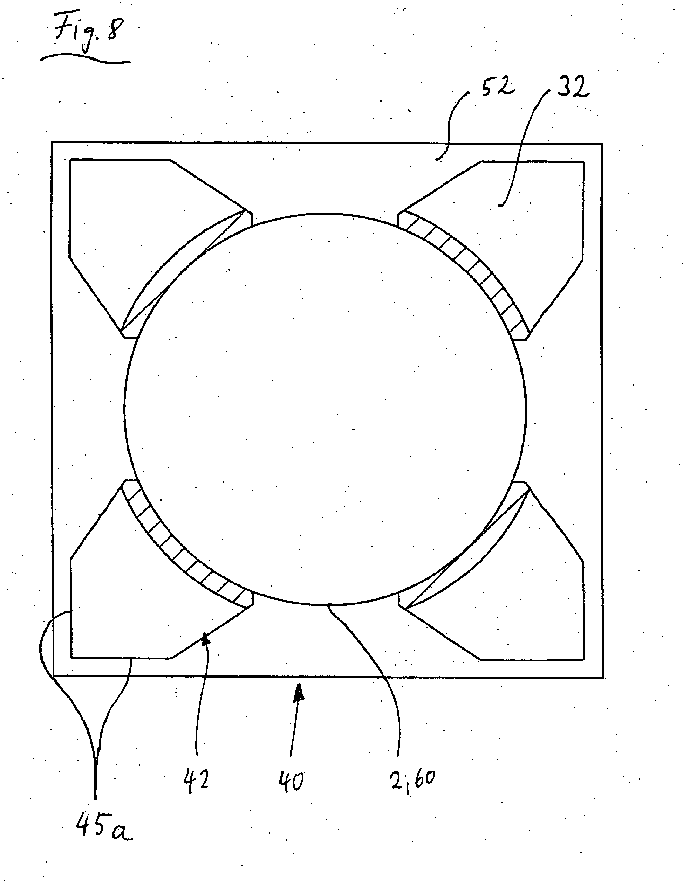

- Fig. 8: einen Querschnitt durch ein Verbindungsteil entsprechend Linie VIII - VIII in Fig. 6,

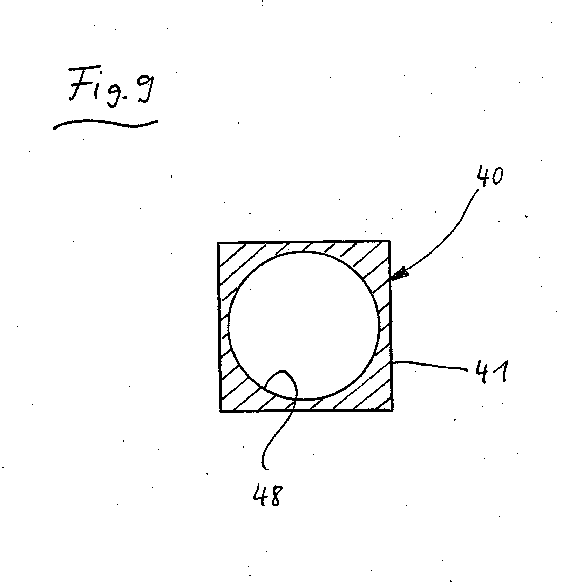

- Fig. 9: einen Querschnitt durch den Mittelteil bzw. das Distanzstück eines Verbindungsteils entsprechend Linie IX - IX in Fig. 6,
- Fig. 10: eine Draufsicht auf ein Ersatzelement mit alternativ gestalteten Verbindungsteilen.

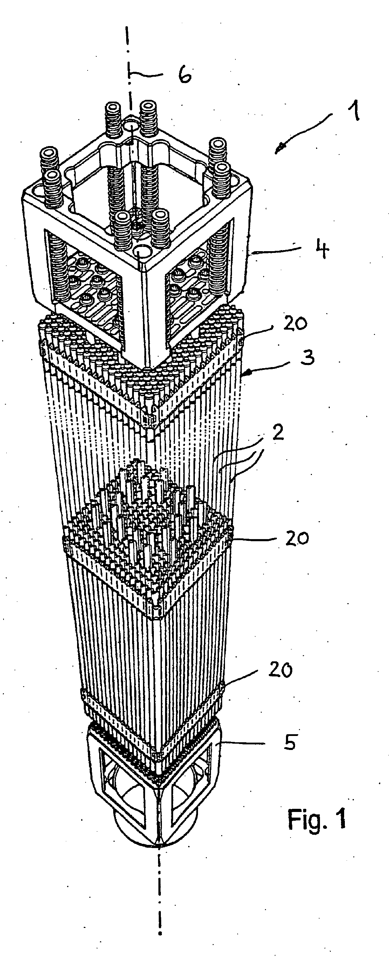

Fig. 1 zeigt ein Brennelement 1 eines Leichtwasserreaktors, nämlich eines Druckwasserreaktors, das ein aus einer Vielzahl von Brennstäben 2 gebildetes Brennstabbündel 3, einen Brennelementkopf 4, einen Brennelementfuß 5 und mehrere die Brennstäbe 2 lateral haltende, sich quer zur Mittellängsachse 6 des Brennelements 1 erstreckende Abstandhalter 20 umfasst.

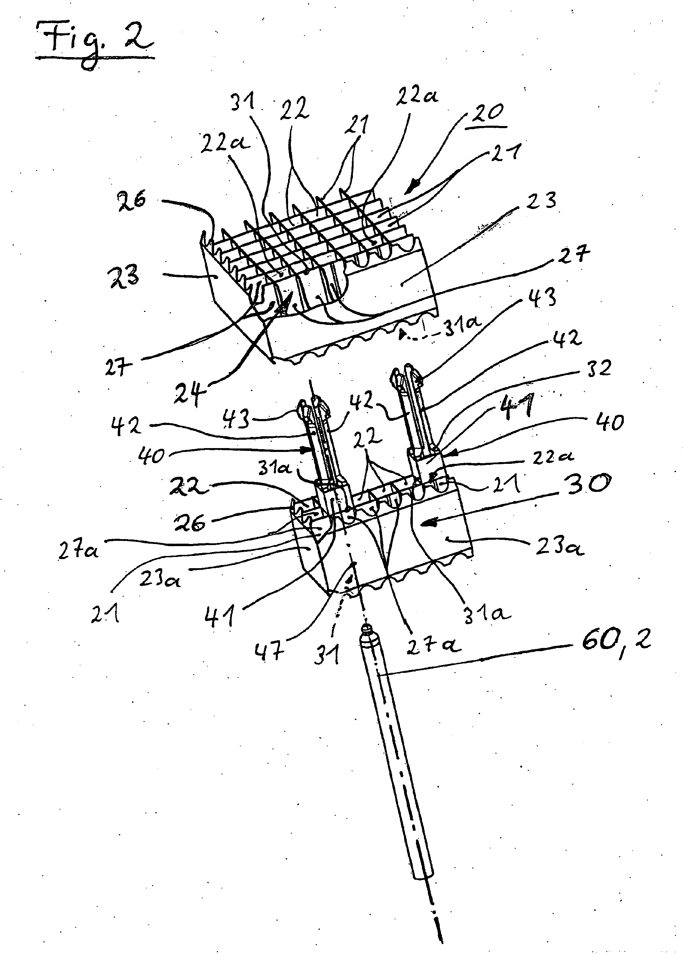

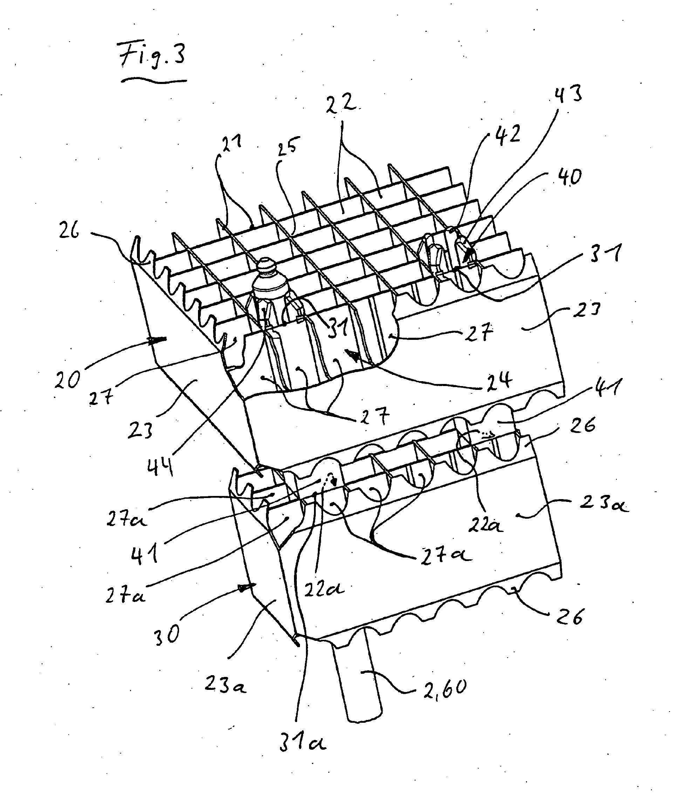

Fig. 2 und 3 zeigen einen Ausschnitt eines Abstandhalters 20 sowie ein Ersatzelement 30 mit zwei Verbindungsteilen 40. Der Abstandhalter 20 besteht aus einer Vielzahl von quadratischen Zellen 22, welche durch gekreuzte Stege 21 gebildet sind und jeweils von einem Brennstab 2 (in Fig. 2 und 3 aus-Vereinfachungsgründen weggelassen) axial, d.h. in Richtung der Mittellängsachse 6 des Brennelements, durchgriffen sind. Der Außenrand des Abstandhalters 20 wird von Außenstegen 23 gebildet. Am oberen und unteren Rand der Außenstege 23 sind Strömungsfahnen 26 angeformt. Wenn hier und im Folgenden von "oben" und "unten" gesprochen wird, so ist auf den Einbauzustand des Brennelements Bezug genommen. In einem Schadbereich 24 sind beispielsweise zwei über Eck miteinander verbundene Außenstege 23 und einige randständige, nämlich an die Außenstege 23 unmittelbar angrenzende Zellen 27 so beschädigt, dass eine ordnungsgemäße, vor allen Dingen vibrationsfreie Halterung eines Brennstabs 2 nicht mehr gewährleisten. Dieses Schadensbild wird der weiteren Beschreibung zugrunde gelegt. Denkbar ist aber auch eine Schädigung weiter innen liegender, nicht direkt an einen Außensteg 23 angrenzender Zellen.

Die Funktion der schadhaften Zellen 27 wird durch das Ersatzelement 30 übernommen, welches mit Hilfe von zwei Verbindungsteilen 40 mit Axialabstand an der Unterseite des Abstandhalters fixiert ist (Fig. 3). Das Ersatzelement 30 ist ein aus einem zum beschädigten Abstandhalter 20 baugleichen Abstandhalter herausgetrennter Teilbereich und umfasst zwei über Eck miteinander verbundene Außenstege 23a sowie jeweils eine an diese angrenzende erste Reihe sowie eine weitere sich radial nach innen anschließende zweite Reihe von Zellen. Die erste Reihe umfasst mindestens eine der Anzahl der beschädigten Zellen 27 des Schadbereichs 24 entsprechende Zahl von Ersatzzellen 27a. Im dargestellten Fall umfasst der Schadbereich 24 fünf schadhafte Zellen 27, wobei die erste Zellenreihe des Ersatzelements 30 insgesamt acht Zellen, davon 5 Ersatzzellen 27a enthält. Die zweite Zellenreihe des Ersatzelements 30 umfasst sechs Zellen 22, wobei zwei davon als Montagezellen 22, d.h. zur Fixierung des Verbindungsteils 40 dienen. Das Ersatzelement 30 ist im Raster des Abstandhalters 20 ausgerichtet, so dass seine Ersatzzellen 27a deckungsgleich mit den schadhaften Zellen 27 des Abstandhalters 20 sind und seine Außenstege 23a mit den Außenstegen 23 des Abstandhalters 20 axial, d.h. in Richtung der Mittellängsachse 6 des Brennelements gesehen, fluchten. Die zur Fixierung des Ersatzelements 30 am Abstandhalter 20 dienenden Verbindungsteile 40 wirken einerseits mit einer Montagezelle 22a des Ersatzelements 30 und andererseits mit einer entsprechenden Montagezelle 22a des Abstandshalters 20 im Sinne einer Schnappverbindung zusammen, wobei die Montagezellen 22a des Abstandhalters 20 nicht beschädigte Zellen sind.

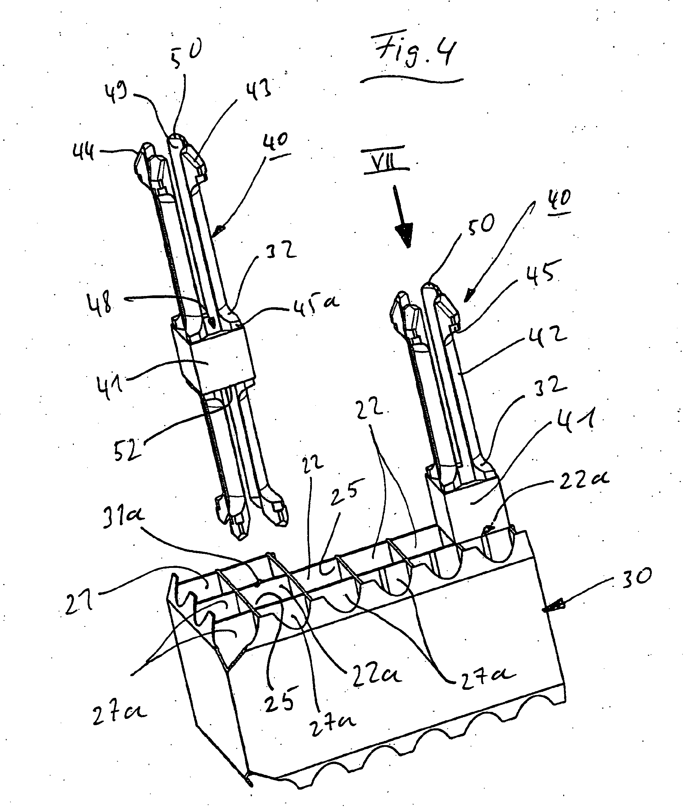

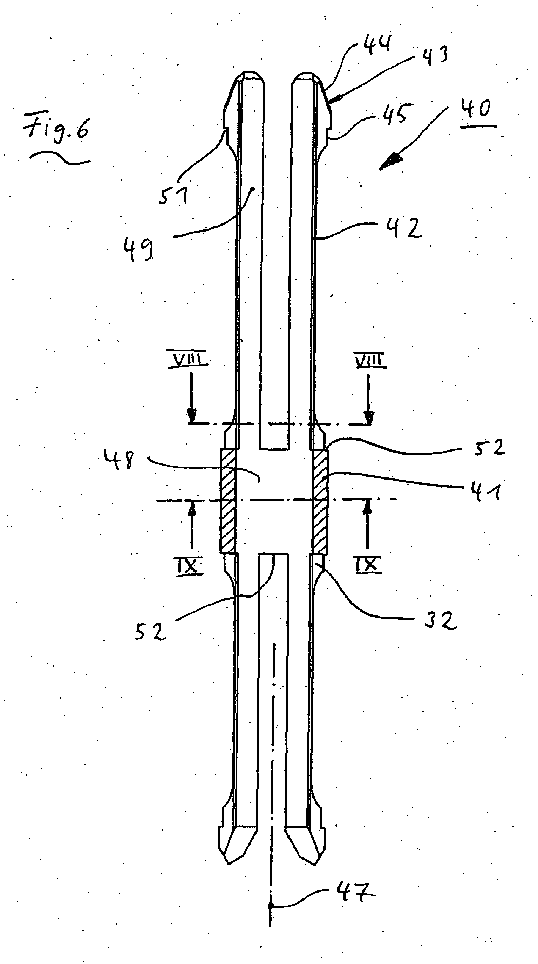

Ein Verbindungsteil 40 setzt sich wie am besten Fig. 4 und 6 zu entnehmen ist, aus einem als Hülse ausgebildeten Distanzstück 41 und beispielsweise acht Federzungen 42 zusammen. Das Distanzstück 41 ist von einer sich axial erstreckenden zentralen Öffnung 48 durchsetzt, deren Durchmesser so gewählt ist, dass sie einen Brennstab 2 oder eine Brennstab-Attrappe 60 im Wesentlichen spielfrei aufnehmen kann. Von den Stirnflächen des Distanzstücks 41, welche sich rechtwinklig zur Mittellängsachse 6 des Brennelements 1 erstrecken und die eine - weiter unten erläuterte - Anschlagfläche 52 bilden, stehen jeweils vier in Umfangsrichtung gleich verteilte Federzungen 42 in Richtung der parallel zur Mittellängsachse 6 des Brennelements verlaufenden Mittellängsachse 47 des Verbindungsteils 40 ab. Die Federzungen 42 sind im Wesentlichen leistenförmig ausgestaltet, wobei ihre der Mittellängsachse 47 zugewandten Innenflächen 49 entsprechend der Umfangsfläche eines Brennstabs 2 gekrümmt sind und im Montagezustand an dieser anliegen. Die Freienden der Federzungen 42 sind außenseitig jeweils mit einen zwei Radialschultern 51 und eine das Einstecken der Federzungen 42 in eine Montagezelle 22a erleichternde Einführschräge 44 aufweisenden Rastvorsprung 43 versehen. Weiterhin sind an einem Rastvorsprung 43 zwei dem Eckbereich 25 einer Zelle 22a angepasste, also rechtwinklig zueinander und in Richtung der Mittellängsachse 47 des Verbindungsteils 40 verlaufende Anschlagflächen 45 vorhanden. Die Anschlagflächen 45 schließen sich jeweils an eine Radialschulter 51 an, wobei Radialschulter 51 und Anschlagfläche 45 einen rechten Winkel miteinander bilden.

Zur Reparatur eines Brennelements 1 mit einem Schadensbild der in Rede stehenden Art wird unter Zuhilfenahme eines oder mehrerer Manipulatoren vorzugsweise so vorgegangen: Ein schadhaftes Brennelement 1 wird aus dem Reaktorkern entnommen, in ein Lagerbecken verbracht und so gedreht, dass der Brennelementfuß zugänglich ist und demontiert werden kann. Nach dessen Demontage werden die einen Schadbereich 24 durchsetzenden Brennstäbe 2 aus dem Brennstabbündel 3 herausgezogen. Im Schadbereich 24 werden die Außenstege 23 des Abstandhalters 20 gegebenenfalls entgratet und so gerichtet, dass sie nicht über die normale Umrissfläche bzw. Schlüsselweite eines Abstandhalters 20 hinausstehen. Ein dem Schadbereich 24 angepasstes Ersatzelement 30 wird auf der einen oder der anderen Flachseite bzw. - auf den Montagezustand bezogen - ober- oder unterhalb des Abstandhalters 20 so positioniert, dass jeweils einer beschädigten Zelle 27 eine Ersatzzelle 27a des Ersatzelements 30 axial zugeordnet ist. Im Ersatzelement 30 sind in wenigstens zwei Montagezellen 22a Verbindungsteile 40 fixiert, wobei ihre Federzungen 42 die Montagezellen 22a durchgreifen und die an deren Freienden vorhandenen Rastvorsprünge 43 die ihnen zugewandten Stirnkanten 31 (in den Abbildungen verdeckt) der Stege 21 des Ersatzelements 30 hintergreifen. Das derart vorbereitete Ersatzelement 30 wird dann axial dem Abstandhalter 20 genähert, wobei die in Richtung auf den Abstandhalter 20 abstehenden Federzungen 42 in dessen Montagezellen 22a eingeschoben werden, bis ihre Rastvorsprünge 43 - wie oben schon beschrieben - die ihnen zugewandten Stirnkanten 31 der Stege 21 hintergreifen. Weitere Manipulationen zur Fixierung des Ersatzelements 30 am Abstandhalter 20 sind nicht erforderlich. Die vorher entnommenen Brennstäbe - oder zumindest ein Teil davon - werden wieder in das Brennelement 1 so eingesetzt; dass sie jeweils eine beschädigte Zelle 27 und eine ihr axial zugeordnete Ersatzelle 27a des Eratzelements 30 durchgreifen.

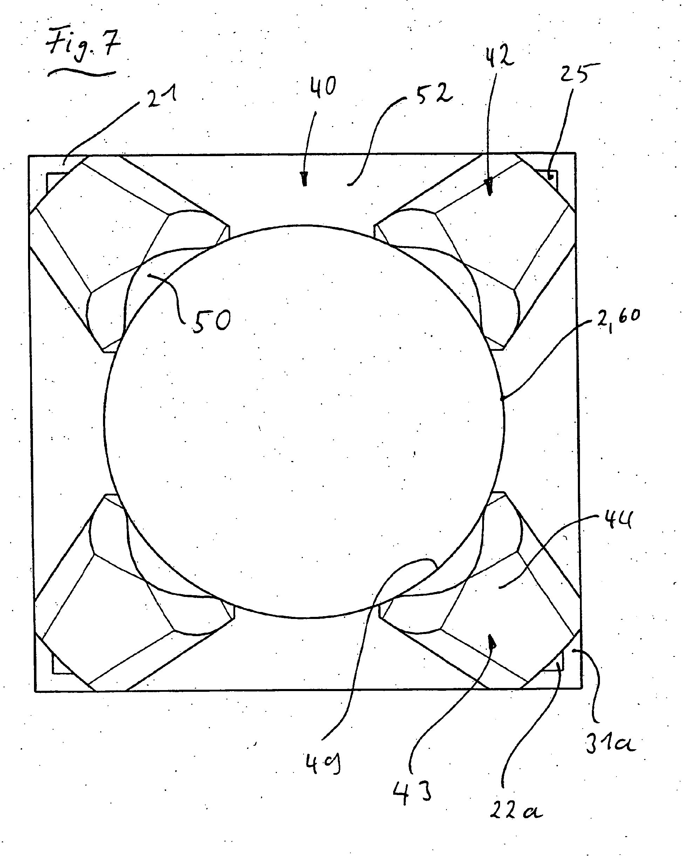

In dem auf die geschilderte Weise hergestellten Montagezustand liegen die Anschlagflächen 45 der Rastvorsprünge 43 an den jeweiligen Eckbereichen 25 einer Montagezelle 22a an, wodurch eine Verdrehsicherung des Verbindungsteils 40 gegenüber dem Abstandhalter 20 bzw. dem Ersatzelement 30 gewährleistet ist. Die die Stirnkanten 31 der Stege 21 hintergreifenden Radialschultern 51 und die sie tragenden Bereiche der Rastvorsprünge 43 sind so bemessen, dass letztere nicht oder allenfalls nur so weit in benachbarte Zellen 22 hineinragen (siehe insbesondere Fig. 7), dass diese Zellen von einem Brennstab 2 behinderungsfrei durchgriffen werden können.

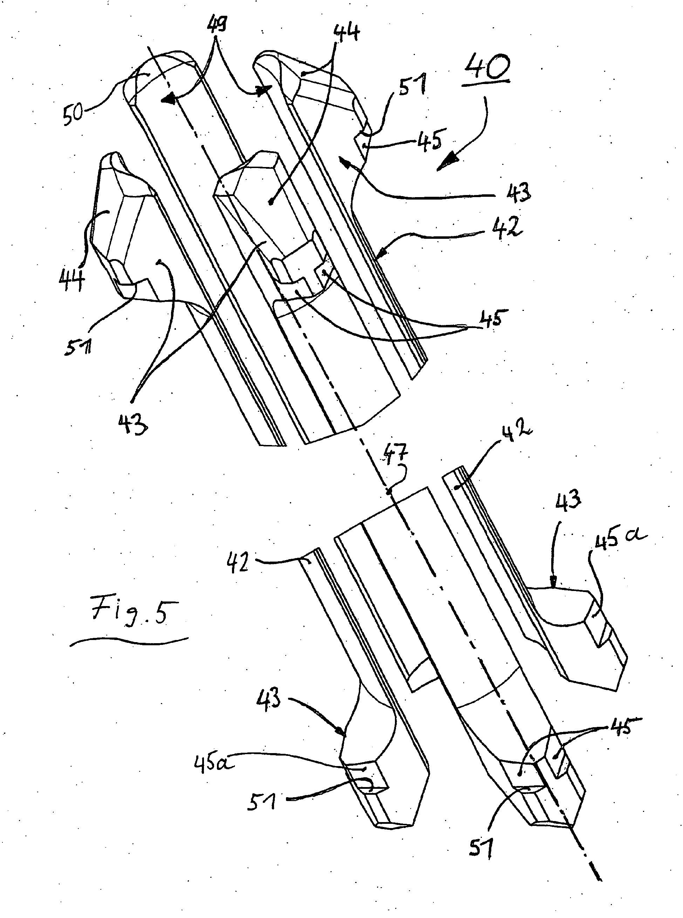

Im Montagezustand hält das Distanzstück 41 einen vorgegebenen Axialabstand zwischen Abstandhalter 20 und Ersatzelement 30 aufrecht. Die den jeweiligen Rastvorsprüngen 43 abgewandten Stirnkanten 31a der Stege 21 liegen dabei an den sich rechtwinklig zur Mittellängsachse 47 des Verbindungsteils 40 erstreckenden Stirnflächen 52 des Distanzstücks 41 an. Der Axialabstand zwischen den Stirnflächen 52 und den Radialschultern 51 der Rastvorsprünge entspricht der Höhe eines Steges 21. Ähnlich wie bei den Rastvorsprüngen sind an der radial nach außen verbreiterten Basis 32 der Federzungen 42 ebenfalls zwei einen rechten Winkel einschließende Anschlagflächen 45a (siehe Fig. 5) vorhanden, die in einem Eckbereich 25 einer Montagezelle 22a einliegen und für eine zusätzliche Verdrehsicherung des Verbindungsteils 40 gegenüber dem Abstandhalter 20 bzw. dem Ersatzelement 30 sorgen.

Das Distanzstück 41 ist von einer Öffnung 48 durchsetzt. In diese Öffnung ist ein Brennstab 2 einsetzbar. Durch das den Brennstab praktisch spielfrei umgreifende Distanzstück ist jedoch ein Zutritt von Primärkühlmittel verhindert oder doch stark eingeschränkt, so dass ein Brennstab nur dann in ein Verbindungsteil 40 eingesetzt werden kann, wenn es sich um den obersten Abstandhalter 20 handelt, der im Bereich des Plenums des Brennelements angeordnet ist. Das Plenum bildet das obere Ende eines Brennstabs 2 und enthält keinen Kernbrennstoff, so dass eine Kühlung bzw. eine Abfuhr von Zerfallswärme nicht erforderlich ist. Bei allen anderen Abstandhaltern 20 kann in ein Verbindungsteil 40 anstelle eines Brennstabs 2 eine Brennstab-Attrappe 60 eingesetzt werden. Dadurch werden Strömungsverhältnisse gewährleistet, wie sie dem ursprünglichen, unbeschädigten Brennelement entsprechen. Durch einen in ein Verbindungsteil 40 eingesetzten Brennstab 2 bzw. durch eine Brennstab-Attrappe 60 werden die Federzungen 42 in ihrer Montageposition gehalten, in der sie mit ihren Rastvorsprüngen 43 die Stirnkanten 31a der Stege 21 hintergreifen, so dass eine sichere Verbindung zwischen Abstandhalter 20 und Ersatzelement gewährleistet ist. Um das Einführen eines Brennstabs 2 oder einer Brennstab-Attrappe zu erleichtern, sind an den Rastvorsprüngen 43 zur Mittellängsachse 47 weisende Einführschrägen 50 vorhanden.

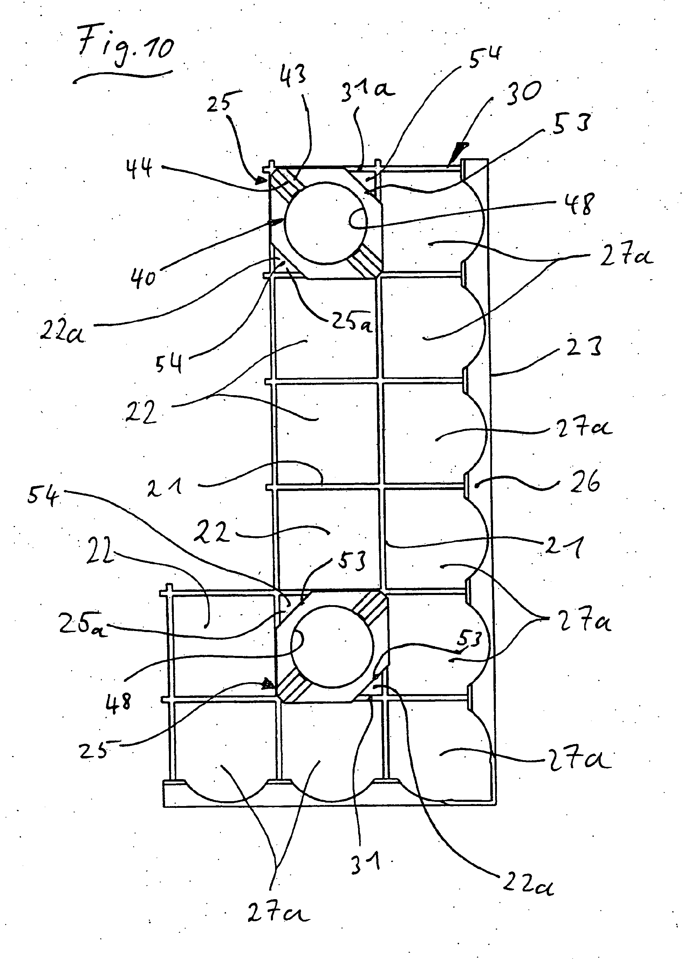

In Fig. 10 ist ein Ersatzelement 30 mit Verbindungsteilen 40a gezeigt, welche nur zwei Federzungen 42 aufweisen, wobei diese sich diametral gegenüberliegenden und jeweils mit einem Eckbereich 25 einer Montagezelle 22a zusammenwirken. Die anderen beiden Eckbereiche 25a sind frei, so dass es, etwa aus strömungstechnischen Gründen zweckmäßig sein kann, wenn das Distanzstück 41a diametral gegenüberliegende seitliche Schrägflächen 53 aufweist und dadurch in den jeweiligen Eckbereichen 25a ein Strömungskanal 54 frei bleibt.

**Bezugszeichenliste**

| | | | |
|---|---|---|---|
| 1 | Brennelement | 48 | Öffnung des |
| 2 | Brennstab | | Verbindungsteils 40 |
| 3 | Brennstabbündel | 49 | Innenfläche der |
| 4 | Brennelementkopf | | Federzungen 42 |
| 5 | Brennelementfuß | 50 | Einführschräge |
| 6 | Mittellängsachse | 51 | Radialschulter am |
| 20 | Abstandhalter | | Rastvorsprung 43 |
| 21 | Steg | 52 | Stirnfläche des |
| 22 | Zelle | | Distanzstücks 41 |
| 22a | Montagezelle | 53 | Schrägfläche |
| 23 | Außensteg | 54 | Strömungskanal |
| 24 | Schadbereich | 60 | Brennstab-Attrappe |
| 25 | Eckbereich | | |
| 26 | Strömungsfahne | | |
| 27 | schadhafte Zelle | | |
| 27a | Ersatzzelle | | |
| 30 | Ersatzelement | | |
| 31 | Stirnkante | | |
| 32 | Basis | | |
| 40 | Verbindungsteil | | |
| 41. | Distanzstück | | |
| 42 | Federzunge | | |
| 43 | Rastvorsprung | | |
| 44 | Einführschräge | | |
| 45 | Anschlagfläche | | |
| 46 | Abstandhalterhülse am Verbindungsteil 40 | | |
| 47 | Mittellängsachse des Verbindungsteils 40 | | |

## Patentansprüche

1. Brennelement (1) für einen Leichtwasserreaktor mit einem Brennstabbündel (3), einem Abstandhalter (20) und einem Ersatzelement (30), wobei
- der Abstandhalter (20) mehrere von Stegen (21) umgrenzte Zellen (22) zum lateralen Halten der Brennstäbe (2) und in einem Randbereich einen wenigstens eine beschädigte Zelle (27) umfassenden Schadbereich (24) aufweist und
- das Ersatzelement (30) zumindest eine der Anzahl der beschädigten Zellen (27) entsprechende Anzahl von Zellen (22a) umfasst und zumindest ein Teil dieser Zellen von Brennstäben (2) durchgriffen ist,
**dadurch gekennzeichnet, dass**
das Ersatzelement (30) oberhalb oder unterhalb des Schadbereichs (24) mit Hilfe wenigstens eines Verbindungsteils (40) am Abstandhalter (20) befestigt ist.

2. Brennelement nach Anspruch 1, **gekennzeichnet durch** eine Schnappverbindung zwischen Abstandhalter (20) und Verbindungsteil (40).

3. Brennelement nach Anspruch 1 oder 2, **gekennzeichnet durch** eine Schnappverbindung zwischen Ersatzelement (30) und Verbindungsteil (40).

4. Brennelement nach Anspruch 2 oder 3, **dadurch gekennzeichnet, dass** an einem Verbindungsteil (40) sich axial erstreckende Federzungen (42) vorhanden sind, die jeweils eine Zelle (22, 22a) des Abstandhalters (20) bzw. des Ersatzelements (30) durchsetzen und an ihrem aus der Zelle herausragenden Freiende einen Rastvorsprung (43) tragen, welcher mit einer Radialschulter (51) die dem Rastvorsprung zugewandte Stirnkante (31) eines Steges (21) hintergreift.

5. Brennelement nach Anspruch 4, **dadurch gekennzeichnet, dass** in einem der Höhe eines Steges (21) entsprechenden Axialabstand am Verbindungsteil (40) eine Anschlagfläche (52) vorhanden ist, welche die dem Rastvorsprung (43) abgewandte Stirnkante (31a) eines Steges (21) hintergreift.

6. Brennelement nach Anspruch 4 und 5, **dadurch gekennzeichnet, dass** die Anschlagfläche von einer sich rechtwinklig zur Mittellängsachse (47) des Brennelement (1) erstreckenden Stirnfläche (52) eines Distanzstücks (41) des Verbindungsteils (40) gebildet ist, wobei an der Stirnfläche (52) die Federzungen (42) angeformt sind.

7. Brennelement nach einem der vorhergehenden Ansprüche, **dadurch gekennzeichnet, dass** am Verbindungsteil (40) zumindest zwei mit diametral gegenüberliegenden Bereichen der Zelle (22) zusammenwirkende, der Zellenform angepasste Anschlagflächen (45, 45a) vorhanden sind.

8. Brennelement nach Anspruch 7 in Verbindung mit Anspruch 4, **dadurch gekennzeichnet, dass** die Anschlagflächen (45, 45a) an einem Rastvorsprung (43) und/oder an der Basis der Federzungen (42) vorhanden sind.

9. Brennelement nach einem der Ansprüche 4 bis 8, **dadurch gekennzeichnet, dass** die Rastvorsprünge (43) mit der Stirnkante (31a) eines Stegs (21) zusammenwirkende Einführschrägen (44) aufweisen.

10. Brennelement nach einem der Ansprüche 4 bis 9, **gekennzeichnet durch** eckige Zellen (22), wobei die Federzungen (42) jeweils einen Eckbereich (25) einer Zelle (22) durchsetzen.

11. Brennelement nach einem der vorhergehenden Ansprüche, **gekennzeichnet durch** ein Verbindungsteil (40), das von einem Hohlraum axial durchsetzt ist, welcher von einem Brennstab (2) oder einer Brennstab-Attrappe (60) durchgriffen ist.

12. Brennelement nach Anspruch 11, **dadurch gekennzeichnet, dass** die der Mittellängsachse (47) des Verbindungsteils (40) zugewandten Innenseiten der Federzungen (42) komplementär zur Zylindermantelfläche eines Brennstabs (2) bzw. einer Brennstab-Attrappe (60) ausgebildet sind.

13. Verfahren zur Reparatur eines Leichtwasserreaktor-Brennelements, das mehrere Brennstäbe (2), einen Brennelementkopf (4), einen Brennelementfuß (5) und wenigstens einen von Stegen (21) umgrenzte Zellen (22) aufweisenden Abstandhalter (20) zur lateralen Lagerung der Brennstäbe (2) umfasst, wobei in einem Randbereich eines Abstandhalters ein Schadbereich (24) vorhanden ist, der wenigstens eine beschädigte, eine ordnungsgemäße laterale Lagerung eines Brennstabs nicht mehr gewährleistende Zelle (22, 27) aufweist, **dadurch gekennzeichnet, dass** ober- oder unterhalb des Schadbereichs (24) mit Hilfe eines Verbindungsteils (40) am Abstandhalter (20) ein Ersatzelement (30) fixiert wird, welches die Haltefunktion zumindest einer schadhaften Zelle übernimmt.

14. Verfahren nach Anspruch 13, **gekennzeichnet durch** folgende weiteren Schritte:
- die einen Schadbereich (24) durchsetzenden Brennstäbe (8) werden nach Demontage des Brennelementfußes aus dem Brennstabbündel (7) entnommen,
- mit Hilfe eines Manipulators wird das Ersatzelement (30) ober- oder unterhalb des Abstandhalters (20) so positioniert, dass jeweils einer beschädigten Zelle (27) eine Zelle (22a) des Ersatzelements (30) axial zugeordnet ist,
- zumindest ein Teil der entnommenen Brennstäbe (8) wird so in das Brennstabbündel (7) eingesetzt, dass sie jeweils eine beschädigte und eine ihr axial zugeordnete Zelle (22a) des Eratzelements (30) durchgreifen.

15. Verfahren nach Anspruch 14, **dadurch gekennzeichnet, dass**
- ein Ersatzelement (30) bereitgestellt wird, aus dessen dem Abstandhalter (20) zugewandten Seite wenigstens ein eine Schnappverbindung zwischen Abstandhalter (20) und Ersatzelement (30) herstellendes Verbindungsteil (40) vorsteht,
- das Ersatzelement (30) mit Hilfe eines Manipulators in eine Position gebracht wird, in der sein Zellenraster deckungsgleich mit jenem des Schadbereichs (24) ist,
- und dann das Ersatzelement (30) in Bezug auf das Brennelement (1) axial verfahren wird, um das Verbindungsteil (40) zur Herstellung der Schnappverbindung in eine Zelle (22) des Abstandhalters (20) einzuführen.

16. Verfahren nach Anspruch 15, **gekennzeichnet durch** die Verwendung eines von einem Hohlraum axial durchsetzten Verbindungsteils (40), wobei **durch** den Hohlraum ein Brennstab (8) oder eine Brennstab-Attrappe (60) gesteckt wird.

## Claims

1. Fuel element (1) for a light water reactor, comprising a fuel rod cluster (3), a spacer (20) and a replacement element (30), where
- the spacer (20) has a number of cells (22), bounded by webs (21), for laterally holding the fuel rods (2) and a damaged region (24) including at least one damaged cell (27) in an edge region, and
- the replacement element (30) comprises at least a number of cells (22a) that corresponds to the number of the damaged cells (27), and at least a portion of these cells is traversed by fuel rods (2),
**characterized in that** the replacement element (30) is fastened above or below the damaged region (24) with the aid of at least one connecting part (40) on the spacer (20).

2. Fuel element according to Claim 1, **characterized by** a snap connection between the spacer (20) and connecting part (40).

3. Fuel element according to Claim 1 or 2,
**characterized by** a snap connection between the replacement element (30) and connecting part (40).

4. Fuel element according to Claim 2 or 3,
**characterized in that** present on a connecting part (40) are axial-ly extending spring tongues (42) that respectively penetrate a cell (22, 22a) of the spacer (20) or of the replacement element (30) and bear at their free end protruding from the cell a latching projection (43) that engages with a radial shoulder (51) behind the end edge (31), facing the latching projection, of a web (21).

5. Fuel element according to Claim 4, **characterized in that** present on the connecting part (40) at an axial distance corresponding to the height of a web (21) is a stop surface (52) that engages behind the end edge (31a), averted from the latching projection (43), of a web (21).

6. Fuel element according to Claims 4 and 5,
**characterized in that** the stop surface is formed from an end surface (52), extending at right angles to the central longitudinal axis (47) of the fuel element (1), of a spacer piece (41) of the connecting part (40), the spring tongues (42) being formed on the end surface (52).

7. Fuel element according to one of the preceding claims, **characterized in that** at least two stop surfaces (45, 45a) that interact with diametrically opposite regions of the cell (22) and are adapted to the cell shape, are present on the connecting part (40).

8. Fuel element according to Claim 7 in conjunction with Claim 4, **characterized in that** the stop surfaces (45, 45a) are present on a latching projection (43) and/or on the base of the spring tongues (42).

9. Fuel' element according to one of Claims 4 to 8, **characterized in that** the latching projections (43) have insertion bevels (44) interacting with the end edge (31a) of a web (21).

10. Fuel element according to one of Claims 4 to 9,
**characterized by** angular cells (22), the spring tongues (42) respectively penetrating a corner region (25) of a cell (22).

11. Fuel element according to one of the preceding claims, **characterized by** a connecting part (40) which is axially penetrated by a cavity traversed by a fuel rod (2) or a dummy fuel rod (60).

12. Fuel element according to Claim 11, **characterized in that** the inner sides, facing the central longitudinal axis (47) of the connecting part (40), of the spring tongues (42) are designed in a complementary fashion to the lateral cylinder surface of a fuel rod (2) or of a dummy fuel rod (60).

13. Method for repairing a light water reactor fuel element that comprises a number of fuel rods (2), a fuel element head (4), a fuel element foot (5) and at least one spacer (20) having cells (22), bounded by webs (21), for laterally supporting the fuel rods (2), there being present in an edge region of a spacer a damaged region (24) that has at least one damaged cell (22, 27) which no longer ensures proper lateral supporting of a fuel rod, **characterized in that** fixed above or below the damaged region (24) with the aid of a connecting part (40) on the spacer (20) is a replacement element (30) that takes over the holding function at least of one defective cell.

14. Method according to Claim 13, **characterized by** the following further steps:
- the fuel rods (8) penetrating a damaged region (24) are removed from the fuel rod cluster (7) after disassembly of the fuel element foot,
- a manipulator is used to position the replacement element (30) above or below the spacer (20) such that in each case a cell (22a) of the replacement element (30) is axially assigned to a damaged cell (27), and
- at least a portion of the removed fuel rods (8) is inserted into the fuel rod cluster (7) such that they respectively traverse a damaged cell and a cell (22a) of the replacement element (30) axially assigned to it.

15. Method according to Claim 14, **characterized in that:**
- a replacement element (30) is provided, from the side of which facing the spacer (20) there projects at least one connecting part (40) producing a snap connection between the spacer (20) and replacement element (30),
- the replacement element (30) is brought with the aid of a manipulator into a position in which its cell array is congruent with that of the damaged region (24),
- and then the replacement element (30) is moved axially with reference to the fuel element (1) in order to introduce the connecting part (40) into a cell (22) of the spacer (20) in order to produce the snap connection.

16. Method according to Claim 15, **characterized by** the use of a connecting part (40) axially penetrated by a cavity, a fuel rod (8) or a dummy fuel rod (60) being plugged through the cavity.

## Revendications

1. Elément combustible (1) pour un réacteur à eau légère comprenant un ensemble de barres de combustible (3), un écarteur (20) et un élément de remplacement (30),
- l'écarteur (20) présentant plusieurs cellules (22) délimitées par des nervures (21) pour le maintien latéral des barres de combustible (2) et dans une zone périphérique une zone détériorée (24) comprenant au moins une cellule (27) endommagée et
- l'élément de remplacement (30) comprenant au moins un nombre de cellules (22a) correspondant au nombre des cellules (27) endommagées et au moins une partie de ces cellules est traversée par des barres de combustible (2),
**caractérisé en ce que** l'élément de remplacement (30) est fixé au-dessus ou au-dessous de la zone détériorée (24) à l'aide d'au moins une partie de liaison (40) sur l'écarteur (20).

2. Elément combustible selon la revendication 1,
**caractérisé par** une liaison par emboîtement entre l'écarteur (20) et la partie de liaison (40).

3. Elément combustible selon la revendication 1 ou 2,
**caractérisé par** une liaison par emboîtement entre l'élément de remplacement (30) et la partie de liaison (40).

4. Elément combustible selon la revendication 2 ou 3,
**caractérisé en ce que** sur une partie de liaison (40) sont présentes des lames de ressort (42) s'étendant axialement, lesquelles passent à chaque fois dans une cellule (22, 22a) de l'écarteur (20) ou de l'élément de remplacement (30) et portent sur leur extrémité libre dépassant de la cellule une saillie d'arrêt (43), qui saisit par l'arrière par un épaulement radial (51) le bord avant (31) tourné vers la saillie d'arrêt, d'une nervure (21).

5. Elément combustible selon la revendication 4,
**caractérisé en ce qu'**une surface de butée (52), qui saisit par l'arrière l'arête frontale avant (31a), opposé à la saillie d'arrêt (43), d'une nervure (21), est présente à une distance axiale correspondant à la hauteur d'une nervure (21) sur la partie de liaison (40).

6. Elément combustible selon les revendications 4 et 5,
**caractérisé en ce que** la surface de butée est formée par une surface frontale (52), s'étendant à angle droit par rapport à l'axe longitudinal médian (47) de l'élément combustible (1), d'une pièce d'écartement (41) de la partie de liaison (40), les lames de ressort (42) étant formées sur la surface frontale (52).

7. Elément combustible selon l'une quelconque des revendications précédentes, **caractérisé en ce qu'**au moins deux surfaces de butée (45, 45a) coopérant avec des zones diamétralement opposées de la cellule (22) et adaptées à la forme de cellule sont présentes sur la partie de liaison (40).

8. Elément combustible selon la revendication 7 en liaison avec la revendication 4, **caractérisé en ce qu'**une surface de butée (45, 45a) sont présentes sur une saillie d'arrêt (43) et/ou sur la base des lames de ressort (42).

9. Elément combustible selon l'une quelconque des revendications 4 à 8, **caractérisé en ce que** les saillies d'arrêt (43) présentent des chanfreins d'entrée (44) coopérant avec l'arête frontale avant (31a) d'une nervure (21).

10. Elément combustible selon l'une quelconque des revendications 4 à 9, **caractérisé par** des cellules (22) anguleuses, les lames de ressort (42) passant à chaque fois dans une zone d'angle (25) d'une cellule (22).

11. Elément combustible selon l'une quelconque des revendications précédentes, **caractérisé par** une partie de liaison (40), qui est traversée axialement par une cavité qui est traversée par une barre de combustible (2) ou un leurre de barre de combustible (60).

12. Elément combustible selon la revendication 11,
**caractérisé en ce que** les côtés intérieurs, tournés vers l'axe longitudinal médian (47) de la partie de liaison (40), des lames de ressort (42) sont conçus de façon complémentaire par rapport à la surface d'enveloppe cylindrique d'une barre de combustible (2) ou d'un leurre de barre de combustible (60).

13. Procédé pour la réparation d'un élément combustible de réacteur à eau légère, qui comporte plusieurs barres de combustible (2), une tête d'élément combustible (4), un pied d'élément combustible (5) et au moins un écarteur (20) présentant des cellules (22) délimitées par des nervures (21) pour la fixation latérale des barres de combustible (2), une zone détériorée (24) étant présente dans une zone périphérique d'un écarteur, qui présente au moins une cellule (22, 27) endommagée, qui ne garantit plus une fixation latérale correcte d'une barre de combustible, **caractérisé en ce qu'**un élément de remplacement (30), qui assume la fonction de maintien d'au moins une cellule endommagée, qui est fixée au-dessus ou au-dessous de la zone détériorée (24) à l'aide d'une partie de liaison (40).

14. Procédé selon la revendication 13, **caractérisé par** les autres étapes suivantes :
- les barres de combustible (8) traversant une zone détériorée (24) sont enlevées du groupe de barres de combustible (7) après le démontage du pied de l'élément combustible,
- l'élément de remplacement (30) est positionné à l'aide d'un manipulateur au-dessus ou au-dessous de l'écarteur (20) de telle sorte qu'une cellule (22a) de l'élément de remplacement (30) est attribué axialement à chaque fois à une cellule (27) endommagée,
- au moins une partie des barres de combustible (8) enlevées est insérée dans l'ensemble de barres de combustible (7) de façon qu'elles passent à chaque fois dans une cellule (22a) endommagée et une cellule (22a) qui lui est attribuée axialement de l'élément de remplacement (30).

15. Procédé selon la revendication 14, **caractérisé en ce que**
- un élément de remplacement (30) est mis à disposition, du côté, tourné vers l'écarteur (20) duquel dépasse au moins une partie de liaison (40) établissant une liaison par emboîtement entre l'écarteur (20) et l'élément de remplacement (30),
- l'élément de remplacement (30) est amené à l'aide d'un manipulateur dans une position dans laquelle sa trame de cellules coïncide avec celle de la zone détériorée (24),
- et l'élément de remplacement (30) est déplacé ensuite axialement par rapport à l'élément combustible (1), afin d'introduire la partie de liaison (40) pour l'établissement de la liaison par emboîtement dans une cellule (22) de l'écarteur (20).

16. Procédé selon la revendication 15, **caractérisé par** l'utilisation d'une partie de liaison (40) traversée axialement par une cavité, une barre de combustible (8) ou un leurre de barre de combustible (60) étant emboîtée à travers la cavité.
